# EUROPEAN PATENT APPLICATION

(11) **EP 4 120 752 A1**
(43) Date of publication of application: **18.01.2023**
(21) Application number: 20924487.0
(22) Date of filing: 09.09.2020
(51) Int. Cl.: H04W 56/00, H04W 92/08, H04W 68/12, H04W 88/06

(54) **TERMINAL DEVICE FOR EXECUTING CALL CONTROL FOR TERMINAL DEVICE INCLUDING MULTIPLE SUBSCRIBER IDENTITY MODULES, BASE STATION APPARATUS, CONTROL METHOD, AND PROGRAM**

(30) Priority: 10.03.2020 JP 2020041170
(71) Applicant: KDDI Corporation, Tokyo 163-8003 (JP)
(72) Inventor: TAKEDA, Hiroki, Tokyo 163-8003 (JP); WATANABE, Shingo, Tokyo 163-8003 (JP); OOTANI, Jun, Tokyo 163-8003 (JP)
(74) Representative: Pitchford, James Edward
(86) International application number: PCT/JP2020/034031
(87) International publication number: WO 2021/181725

(57) **Abstract**

A terminal apparatus judges whether or not a first timing of paging relating to a first base station apparatus and a second timing of paging relating to a second base station apparatus coincide with each other, transmits, if it is judged that the first and second timings coincide with each other, a predetermined notification regarding a timing of paging to at least one of the first and second base station apparatuses, and changes, on the basis that the predetermined notification has been transmitted, the timing of paging of the base station apparatus to which the predetermined notification has been transmitted.

## Description

### TECHNICAL FIELD

The present invention relates to a terminal apparatus, a base station apparatus, a control method, and a program, and particularly relates to a wireless communication paging technique.

### BACKGROUND ART

In a cellular communication system, a network is configured so that, if there is data to be transmitted to terminal apparatuses, the network provides notification of such data via paging channels. If a terminal apparatus judges, via a paging channel, that there is data addressed to itself, the terminal apparatus establishes connection with a nearby base station apparatus to receive the data from the network. Here, a timing of paging of each terminal apparatus is calculated based on an international mobile subscriber identity (IMSI) stored in a Subscriber Identity Module ("USIM" hereinafter) in the terminal apparatus, and system information transmitted from the network. The terminal apparatus is configured to calculate a timing of paging for itself, and to observe a paging channel at the calculated timing in a disconnected state.

### CITATION LIST

### PATENT LITERATURE

PTL1: Japanese Patent Laid-Open No. 2014-504841

### SUMMARY OF INVENTION

### TECHNICAL PROBLEM

Development is under way of a terminal apparatus including two or more USIMs and a smaller number of (for example only one) receivers. Since each USIM is treated as one subscriber, a timing of paging is separately determined for each of the two or more USIMs. If the timings of paging with respect to these USIMs are different from one another, the terminal apparatus can observe the paging channels corresponding to the USIMs even if the number of receivers included in the terminal apparatus is less than the number of USIMs included in the terminal apparatus. On the other hand, the timings of paging with respect to the plurality of USIMs may coincide with one another. In this case, the paging channels for a number of USIMs corresponding to the number of receivers, among the plurality of USIMs, can be observed. However, the paging channels for the rest of the USIMs cannot be observed. PTL 1 indicates that, if such timings of paging occur, the terminal apparatus reads the paging channel corresponding to a first USIM at the initial timing of paging, and reads the paging channel corresponding to a second USIM at the next timing of paging. However, this operation increases the time that it takes for the terminal apparatus to detect the presence of data addressed to itself, and thus is inefficient.

### SOLUTION TO PROBLEM

The present invention provides a technique for efficiently executing paging in a terminal apparatus including a plurality of Subscriber Identity Modules and a smaller number of receivers.

A terminal apparatus according to one aspect of the present invention includes: judging means for judging whether or not a first timing of paging relating to a first base station apparatus and a second timing of paging relating to a second base station apparatus coincide with each other; notifying means for, if it is judged that the first and second timings coincide with each other, transmitting a predetermined notification regarding a timing of paging to at least one of the first and second base station apparatuses; and changing means for, on the basis that the predetermined notification has been transmitted, changing the timing of paging of the base station apparatus to which the predetermined notification has been transmitted.

A base station apparatus according to one aspect of the present invention includes: receiving means for receiving a predetermined notification regarding a timing of paging from a terminal apparatus; and changing means for changing a timing of paging with respect to the terminal apparatus when the predetermined notification has been received.

### ADVANTAGEOUS EFFECTS OF INVENTION

According to the present invention, paging in a terminal apparatus including a plurality of Subscriber Identity Modules and a smaller number of receivers can be executed efficiently.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating an example of a configuration of a wireless communication system.
FIG. 2 is a diagram illustrating an example of a hardware configuration of a terminal apparatus and base station apparatuses.
FIG. 3 is a diagram illustrating an example of a functional configuration of the terminal apparatus.
FIG. 4 is a diagram illustrating an example of a functional configuration of the base station apparatuses.
FIG. 5 is a diagram illustrating an example of a flow of processing.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### (System Configuration)

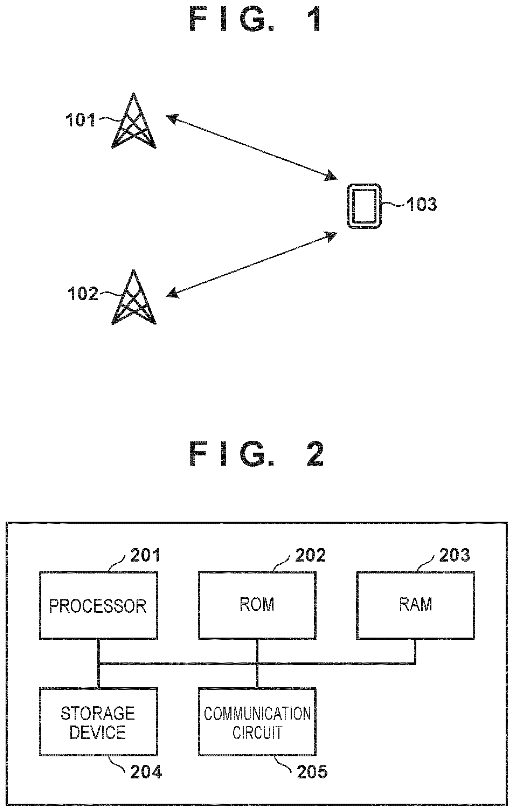

FIG. 1 illustrates an example of a configuration of a wireless communication system according to the present embodiment. The present wireless communication system is a cellular communication system, and is configured to include first and second base station apparatuses 101 and 102, and a terminal apparatus 103, for example. For example, both the first and second base station apparatuses 101 and 102 may be a fifth generation (5G) base station apparatus. Alternatively, one of the first and second base station apparatuses 101 and 102 may be a 5G base station apparatus, and the other may be a Long-Term Evolution (LTE) base station apparatus. Furthermore, both the first and second base station apparatuses 101 and 102 may be an LTE base station apparatus.

The terminal apparatus 103 includes a plurality of Subscriber Identity Modules (USIMs), and is configured to be capable of communicating with the first base station apparatus 101 and the second base station apparatus 102 using a first USIM and a second USIM, respectively. Note that, in the present embodiment, the terminal apparatus 103 is in a disconnected state in which the terminal apparatus 103 has not established connection with either one of the base station apparatuses. Thus, based on timings of paging that are calculated based on international mobile subscriber identities (IMSIs) stored in the USIMs and information broadcast from the base station apparatuses via System Information Blocks (SIBs), the terminal apparatus 103 observes paging channels transmitted from the first and second base station apparatuses 101 and 102 and judges whether or not there is data addressed to itself. Furthermore, if the paging channel from the first base station apparatus 101 indicates that there is data addressed to itself, the terminal apparatus 103 establishes connection with the first base station apparatus 101 to receive the data. Similarly, if the paging channel from the second base station apparatus 102 indicates that there is data addressed to itself, the terminal apparatus 103 establishes connection with the second base station apparatus 102 to receive the data.

Here, the timings of paging with respect to the first and second USIMs in the terminal apparatus 103 may coincide with each other. In such a situation, if the terminal apparatus 103 includes two wireless receivers, the terminal apparatus 103 can observe the paging channels using the wireless receivers. On the other hand, if the terminal apparatus 103 includes only one wireless receiver, the terminal apparatus 103 cannot observe the paging channel for one of the first and second USIMs. In a more general sense, if the number of wireless receivers included in the terminal apparatus 103 is equal to (or more than) the number of USIMs included in the terminal apparatus 103, the terminal apparatus 103 can observe the paging channels using the wireless receivers. However, if the number of wireless receivers is less than the number of USIMS, the terminal apparatus 103 may not be able to observe paging channels for some USIMs. Note that, for example, the terminal apparatus 103 can allocate a plurality of paging occasions to the USIMs so that the USIMs sequentially observe the paging channels, for example. However, when seen from the terminal apparatus 103 side, this method brings about a situation similar to that when the paging interval for each USIM has been extended in accordance with the number of USIMs. Thus, it may take a long period of time from when data is generated to when the terminal apparatus 103 recognizes the presence of the data.

In view of such circumstances, in the present embodiment, the terminal apparatus 103 is configured to judge whether or not the timings of paging in the first and second base station apparatuses 101 and 102 coincide with each other, and to change at least one of the timings if these timings coincide with each other. For example, the terminal apparatus 103 provides at least one of the first and second base station apparatuses 101 and 102 with a predetermined notification regarding a timing of paging. Furthermore, a base station apparatus, out of the first and second base station apparatuses 101 and 102, that has received this predetermined notification or that can interpret the predetermined notification can execute control so as to change a timing of paging relating to the terminal apparatus 103. This results in the timings of paging of the plurality of base station apparatuses being different from one another, and thus the terminal apparatus 103 can efficiently observe the paging channels from the base station apparatuses. Accordingly, the terminal apparatus 103 can detect the generation of data to be transmitted to the terminal apparatus 103 in the network side within a short period of time from when the data is generated, and establish connection quickly. Note that, if the terminal apparatus 103 includes a first wireless receiver and a second wireless receiver that can respectively communicate with the first base station apparatus 101 and the second base station apparatus 102, the terminal apparatus 103 can be configured not to provide the above-described predetermined notification. This results in timings of paging not being changed unnecessarily, whereby control load can be mitigated and unnecessary signaling can be reduced. Note that it is conceivable to provide the above-described predetermined notification from the terminal apparatus to the base station apparatuses via an RRC message (for example, RRCSetupComplete or UEAssistanceInformation) or layer 1 signaling.

Note that the terminal apparatus 103 may be configured to transmit the above-described predetermined notification only to a base station apparatus that supports the control in a case in which the terminal apparatus includes a plurality of USIMs and that supports the change of a timing of paging of the terminal apparatus, for example. In other words, a configuration can be adopted such that the predetermined notification is not provided to a base station apparatus that cannot change a timing of paging. Thus, unnecessary signaling can be prevented. In this case, only a base station apparatus that supports the control in a case in which the terminal apparatus includes a plurality of USIMs changes a timing of paging, and a base station apparatus that does not support the control in a case in which the terminal apparatus includes a plurality of USIMs does not change a timing of paging.

Furthermore, if both the first and second base station apparatuses 101 and 102 support the control in a case in which the terminal apparatus includes a plurality of USIMs, the terminal apparatus 103 may use a random number, values relating to the base station apparatuses, such as identification information of the base station apparatuses, etc., to select the base station apparatus that is to change a timing of paging, for example. For example, the first base station apparatus 101 may be selected as the base station apparatus that is to change a timing of paging if the value of a random number that takes a value no less than zero and less than one is less than 0.5, and the second base station apparatus 102 may be selected as the base station apparatus that is to change a timing of paging if the value of the random number is 0.5 or more. Furthermore, values such as IDs relating to the first and second base station apparatuses 101 and 102 may be compared, and the base station apparatus having a greater value may be selected as the base station apparatus that is to change a timing of paging. Also, the terminal apparatus 103 may have a user select which of the first and second base station apparatuses 101 and 102 is to be prioritized, and may select the base station apparatus of lower priority as the base station that is to change a timing of paging. If the two base station apparatuses both support the control in a case in which the terminal apparatus includes a plurality of USIMs, it is possible to cause only one base station apparatus to change a timing of paging by using such methods. Thus, a situation can be prevented in which timings of paging coincide with each other again after the timings have been changed.

Note that the terminal apparatus 103 may judge only whether or not paging frames of the first and second base station apparatuses 101 and 102 coincide with each other, or may further judge whether paging occasions in the paging frames of these base station apparatuses coincide with each other. In other words, the terminal apparatus 103 may be configured to provide the predetermined notification if the paging frames of the first and second base station apparatuses 101 and 102 coincide with each other, or may be configured not to provide the predetermined notification even if the paging frames coincide with each other unless paging occasions coincide with each other. Furthermore, for example, the terminal apparatus 103 may be configured to provide the predetermined notification if all of a plurality of paging frames (paging occasions in some cases) of the first and second base station apparatuses 101 and 102 overlap, and not to provide the predetermined notification if there is only a partial overlap. Also, for example, the terminal apparatus 103 may be configured to provide the predetermined notification if any of a plurality of paging frames (paging occasions in some cases) of the first and second base station apparatuses 101 and 102 overlap. Furthermore, for example, the terminal apparatus 103 may be configured to provide the predetermined notification if portions corresponding to a predetermined proportion or more of a plurality of paging frames (paging occasions in some cases) of the first and second base station apparatuses 101 and 102 overlap. Note that the processing described above is only one example, and the terminal apparatus 103 may be configured to provide the predetermined notification if criteria other than these are satisfied.

Note that, for example, a base station apparatus that supports the change of a timing of paging can notify the terminal apparatus 103 in advance of an offset value for paging frames (paging occasions in some cases). For example, this notification is provided via a broadcast signal. For example, in a case in which the terminal apparatus 103 has provided the first base station apparatus 101 with the predetermined notification, the terminal apparatus 103 shifts a timing of paging of the first base station apparatus 101 by an amount corresponding to the offset value notification of which has been provided in advance, and similarly, the first base station apparatus 101 also shifts a timing of paging for the terminal apparatus 103 by an amount corresponding to the offset value that the first base station apparatus 101 has notified the terminal apparatus 103 of. In such a manner, matching of the changed timings of paging can be performed between the terminal apparatus 103 and the first base station apparatus 101. Note that the base station apparatuses may be configured to notify the terminal apparatus 103 of the offset value when the predetermined notification has been received from the terminal apparatus 103. In other words, notification of the offset value need not be provided in advance. In this case, it is also conceivable for the terminal apparatus 103 to include a timing of paging of a base station apparatus that is not to change a timing of paging in the predetermined notification, and for the base station apparatuses to determine the offset value so as to avoid the timing of paging notification of which has been provided, and notify the terminal apparatus 103 of the determined offset value.

Furthermore, the base station apparatuses may notify the terminal apparatus 103 in advance of a first setting value (parameter) for specifying a timing in a case in which a timing of paging is not to be shifted, and a second setting value for specifying a timing in a case in which a timing of paging is to be shifted. In this case, if the terminal apparatus 103 has provided the first base station apparatus 101 with the predetermined notification, for example, the terminal apparatus 103 specifies a changed timing of paging based on the second setting value notification of which has been provided from the first base station apparatus 101. Furthermore, the first base station apparatus 101 also specifies a changed timing of paging for the terminal apparatus 103 based on the second setting value that the first base station apparatus 101 has notified the terminal apparatus 103 of in advance. Thus, matching of the changed timings of paging can be performed between the terminal apparatus 103 and the first base station apparatus 101. Note that the base station apparatuses may transmit such notification of setting values to the terminal apparatus 103 when the base station apparatuses have received the predetermined notification. In this case, it is also conceivable for the terminal apparatus 103 to include a timing of paging of the second base station apparatus 102, which does not change a timing of paging, in the predetermined notification, and for the first base station apparatus 101 to determine the second setting value so as to avoid the timing of paging notification of which has been provided from the terminal apparatus 103, and notify the terminal apparatus 103 of the determined second setting value. Note that the above-described first and second setting values may be broadcast via a System Information Block (SIB) from the base station apparatuses, or notification thereof may be provided via an RRC message (for example, RRCReconfiguration) other than SIB. It is also conceivable for different notification methods to be used for the first and second setting values, such as SIB for the first setting value and RRCReconfiguration for the second setting value.

Also, for example, the base station apparatuses may provide, in advance, notification of a plurality of types of setting values or offset values for calculating a changed timing of paging in a case in which timings of paging of the plurality of base station apparatuses coincide with each other in the terminal apparatus 103. Furthermore, the terminal apparatus 103 selects one setting value or offset value to be used to calculate a changed timing of paging from among the plurality of setting values or offset values notification of which has been provided. Then, the terminal apparatus 103 can notify a base station apparatus that is to change a timing of paging of the result of the selection by including the result in the predetermined notification, for example. Also, a base station apparatus having received the predetermined notification from the terminal apparatus 103 may select one setting value or offset value to be used to calculate a changed timing of paging from among the plurality of setting values or offset values notification of which has been provided. Then, the base station apparatus may notify the terminal apparatus 103 of the result of the selection by including the result of the selection in a response signal that is a response to the predetermined notification. Thus, matching of the changed timings of paging can be performed between the terminal apparatus 103 and the first base station apparatus 101. Note that the above-described processing is only one example, and matching of the changed timings of paging can be performed between the terminal apparatus 103 and the first base station apparatus 101 using methods other than these.

Furthermore, it is conceivable for a base station apparatus that has changed a timing of paging to notify other base station apparatuses and a core network apparatus of information relating to the change of the timing of paging relating to the terminal apparatus. Thus, the processing relating to the change of a timing of paging can be prevented from being executed again when the terminal apparatus moves and connects to other base station apparatuses.

Note that, while an example in which the terminal apparatus 103 notifies the base station apparatus 101, which is to change a timing of paging, of information relating to paging has been described in the above-described embodiment, an example is also conceivable in which the terminal apparatus 103 notifies a core network apparatus to which base station apparatuses are connected, instead of base station apparatuses, of the change of a timing of paging using a NAS message (for example, Registration Request or the like). In such a case, the core network apparatus having received the information can notify one or more base station apparatuses in the area in which the terminal apparatus 103 is present of information relating to the change of a timing of paging.

### (Apparatus Configuration)

FIG. 2 illustrates an example of a hardware configuration of the terminal apparatus and the base station apparatuses according to the present embodiment. In one example, the terminal apparatus and the base station apparatuses are configured to include a processor 201, a ROM 202, a RAM 203, a storage device 204, and a communication circuit 205. The processor 201 is a computer, such as a general-purpose central processing unit (CPU) or an application-specific integrated circuit (ASIC), that is configured to include one or more processing circuits, and executes processing for the entire apparatus and each processing described above by executing one or more programs stored in the ROM 202 and/or the storage device 204. The ROM 202 is a read-only memory that stores information such as various parameters and programs relating to the processing executed by the terminal apparatus/base station apparatuses. The RAM 203 is a random-access memory that functions as a work space when the processor 201 executes programs, and that stores temporary information. For example, the storage device 204 is configured by a detachable external storage device or the like. For example, the communication circuit 205 is configured by a wireless communication circuit. The terminal apparatus/base station apparatuses is/are configured to include a cellular communication base band circuit and an RF circuit, etc., and an antenna, for example, as the communication circuit 205 for communication with other apparatuses. Note that, while one communication circuit 205 is illustrated in FIG. 2, the terminal apparatus/base station apparatuses may include a plurality of communication circuits. For example, the base station apparatuses may include, in addition to a wireless communication circuit for communication with the terminal apparatus, a wireless communication circuit for communication with other base station apparatuses, etc. Furthermore, the terminal apparatus may include a wireless communication circuit for cellular communication and a wireless communication circuit for wireless LAN, etc. Note that the terminal apparatus includes a plurality of USIMs, and is configured to include at least one wireless communication device such as a wireless communication circuit.

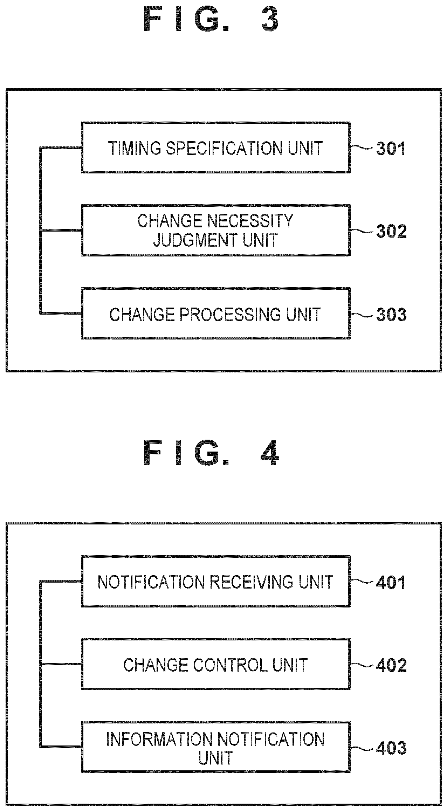

FIG. 3 illustrates an example of a functional configuration of the terminal apparatus according to the present embodiment. For example, the terminal apparatus includes a timing specification unit 301, a change necessity judgment unit 302, and a change processing unit 303. Note that, while the terminal apparatus has functions as a typical terminal apparatus as a matter of course, functions that are not immediately relevant to the present embodiment are omitted from the illustration. For example, the functions in FIG. 3 are realized by the processor 201 reading and executing one or more programs stored in the ROM 202 and/or the storage device 204. However, there is no limitation to this, and dedicated hardware on which at least one of these functions is mounted may be prepared, for example.

The timing specification unit 301 specifies a timing of paging for each of the plurality of USIMs included in the terminal apparatus. Note that the timing of paging may be a paging frame or a paging occasion, for example. For example, in the present embodiment, a timing of paging of the first base station apparatus 101 and a timing of paging of the second base station apparatus 102 are specified.

The change necessity judgment unit 302 judges whether or not a timing of paging needs to be changed, in accordance with whether or not the timings of paging for the plurality of USIMs specified by the timing specification unit 301 coincide with each other. For example, the change necessity judgment unit 302 judges that a timing of paging needs to be changed if all paging frames (or paging occasions in some cases) of the plurality of base station apparatuses coincide with one another. Other judgment criteria have been described above, and thus description thereof is omitted here. Furthermore, the change necessity judgment unit 302 can judge for which one of the base station apparatuses a timing of paging is to be changed. Criteria for making this judgment have also been described above, and thus description thereof is omitted here.

If the change necessity judgment unit 302 judges that a timing of paging is to be changed, the change processing unit 303 transmits the predetermined notification to the base station apparatus that is to change a timing of paging. Furthermore, the change processing unit 303 specifies a changed timing of paging based on, for example, an offset value or setting value notification of which has been provided from the base station apparatus in advance, or an offset value or setting value received in response to the transmission of the predetermined notification to the base station apparatus. Then, the change processing unit 303 performs the observation of a paging channel following this point using the changed timing of paging that has been specified. Note that, because other operations of the terminal apparatus have been described above, description thereof is omitted here.

FIG. 4 illustrates an example of a functional configuration of the base station apparatuses according to the present embodiment. For example, the base station apparatuses are each configured to include a notification reception unit 401, a change control unit 402, and an information notification unit 403. Note that, while the base station apparatus has functions as a typical base station apparatus as a matter of course, functions that are not immediately relevant to the present embodiment are omitted from the illustration. For example, the functions in FIG. 4 are realized by the processor 201 reading and executing one or more programs stored in the ROM 202 and/or the storage device 204. However, there is no limitation to this, and dedicated hardware on which at least one of these functions is mounted may be prepared, for example.

The notification reception unit 401 receives the predetermined notification from a terminal apparatus. Based on this predetermined notification, the base station apparatus recognizes that a timing of paging for the terminal apparatus that has transmitted the predetermined notification needs to be changed. In response to the reception of the predetermined notification, the change control unit 402 executes control for changing the timing of changing. For example, the change control unit 402 changes the timing of paging based on an offset value or setting value notification of which has been provided to the terminal apparatus in advance, or based on an offset value or setting value notification of which has been provided to the terminal apparatus by including the offset value or setting value in a response to the predetermined notification. The information notification unit 403 notifies the terminal apparatus of an offset value or setting value for allowing the changed timing of paging to be specified. Other operations of the terminal apparatus have been described above, and thus description thereof is omitted here.

### (Flow of Processing)

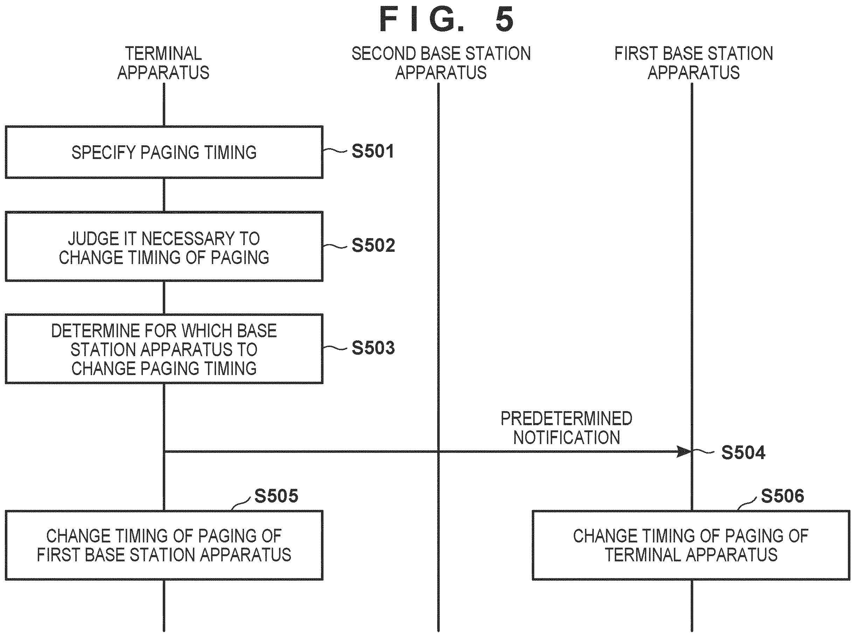

An example of a flow of processing executed in the wireless communication system will be described with reference to FIG. 5. First, the terminal apparatus specifies timings of paging of the plurality of base station apparatuses corresponding to the plurality of USIMs (step S501). Subsequently, the terminal apparatus judges whether one of the timings of paging for the plurality of base station apparatuses needs to be changed due to the timings of paging coinciding with each other. Here, suppose that the terminal apparatus has judged that the timing of paging for one of the plurality of base station apparatuses needs to be changed (step S502). Then, the terminal apparatus determines for which one of the base station apparatuses a timing of paging is to be changed (step S503). That is, a judgment is made as to which one of the timings of paging corresponding to the plurality of base station apparatuses is to be changed. Note that the terminal apparatus may change the timings of paging of the plurality of base station apparatuses, in which case the judgment processing in step S503 does not need to be performed. Here, suppose that the terminal apparatus has determined to change the timing of paging of the first base station apparatus. Based on the judgments in steps S502 and S503, the terminal apparatus transmits, to the first base station apparatus, the predetermined notification regarding a timing of paging (step S504). Then, when the terminal apparatus has transmitted this predetermined notification, the terminal apparatus changes the paging waiting timing for the first base station apparatus, to which the predetermined notification has been transmitted (step S505). Furthermore, in response to the reception of this predetermined notification, the first base station apparatus also changes a timing of paging for the terminal apparatus (step S506). Thus, timings of paging of a plurality of base station apparatuses can be shifted from one another, and a terminal apparatus that only includes one receiver while including a plurality of USIMs can observe paging channels from the base station apparatuses.

The invention is not limited to the foregoing embodiments, and various variations/changes are possible within the spirit of the invention.

This application claims priority from Japanese Patent Application No. 2020-041170 filed on March 10, 2020, which is hereby incorporated by reference herein.

## Claims

1. A terminal apparatus comprising:
judging means for judging whether or not a first timing of paging relating to a first base station apparatus and a second timing of paging relating to a second base station apparatus coincide with each other;
notifying means for, if it is judged that the first and second timings coincide with each other, transmitting a predetermined notification regarding a timing of paging to at least one of the first and second base station apparatuses; and
changing means for, on the basis that the predetermined notification has been transmitted, changing the timing of paging of the base station apparatus to which the predetermined notification has been transmitted.

2. The terminal apparatus according to claim 1 further comprising
determining means for determining which of the first and second timings is to be changed, wherein
the notifying means transmits the predetermined notification to the first base station apparatus if it is determined that the first timing is to be changed, and transmits the predetermined notification to the second base station apparatus if it is determined that the second timing is to be changed.

3. The terminal apparatus according to claim 2, wherein
the determining means determines that the first timing is to be changed if the first base station apparatus supports control of changing a timing of paging and the second base station apparatus does not support the control of changing a timing of paging, and determines that the second timing is to be changed if the second base station apparatus supports the control of changing a timing of paging and the first base station apparatus does not support the control of changing a timing of paging.

4. The terminal apparatus according to claim 2, wherein
the determining means determines which of the first and second timings is to be changed by using a random number or by comparing values relating to the first and second base station apparatuses.

5. The terminal apparatus according to claim 2, wherein
the determining means, based on a selection by a user of which of the first and second base station apparatuses is to be prioritized, determines that a timing of paging of the base station apparatus of lower priority is to be changed.

6. The terminal apparatus according to any one of claims 1 to 5, wherein
the changing means, based on information acquired in advance from the first or second base station apparatus, changes the timing of paging of the base station apparatus to which the predetermined notification has been transmitted.

7. The terminal apparatus according to claim 6, wherein
the notifying means selects, from the information acquired in advance from the first or second base station apparatus, information to be used to change the timing of paging of the base station apparatus to which the predetermined notification has been transmitted, and notifies the base station apparatus of the selected information, and
the changing means, based on the selected information, changes the timing of paging of the base station apparatus to which the predetermined notification has been transmitted.

8. The terminal apparatus according to claim 6, wherein
the changing means receives, from the base station apparatus to which the predetermined notification has been transmitted, information that has been selected from the information acquired in advance from the first or second base station apparatus so that the selected information can be used to change the timing of paging of the base station apparatus to which the predetermined notification has been transmitted, and changes, based on the received information, the timing of paging of the base station apparatus to which the predetermined notification has been transmitted.

9. The terminal apparatus according to any one of claims 1 to 5, wherein
the changing means, based on information received from the base station apparatus to which the predetermined notification has been transmitted when the predetermined notification has been transmitted, changes the timing of paging of the base station apparatus.

10. The terminal apparatus according to any one of claims 6 to 9, wherein
the information includes an offset value of timing or a setting value for specifying a timing.

11. Abase station apparatus comprising:
receiving means for receiving a predetermined notification regarding a timing of paging from a terminal apparatus; and
changing means for changing a timing of paging with respect to the terminal apparatus when the predetermined notification has been received.

12. The base station apparatus according to claim 11 further comprising
notifying means for notifying the terminal apparatus of information including an offset value or a setting value for specifying a changed timing of paging.

13. The base station apparatus according to claim 12, wherein
the notifying means notifies the terminal apparatus in advance of a plurality of pieces of the information, and
the changing means changes the timing of paging with respect to the terminal apparatus based on information that has been selected by the terminal apparatus from among the plurality of pieces of information.

14. The base station apparatus according to claim 12, wherein
the notifying means notifies the terminal apparatus in advance of a plurality of pieces of the information,
the notifying means, if the predetermined notification has been received from the terminal apparatus, further notifies the terminal apparatus of information that has been selected from the plurality of pieces of information, and
the changing means changes the timing of paging with respect to the terminal apparatus based on the selected information.

15. The base station apparatus according to claim 12, wherein
the notifying means notifies the terminal apparatus of the information when the predetermined notification has been received.

16. A control method to be executed by a terminal apparatus, the control method comprising:
judging whether or not a first timing of paging relating to a first base station apparatus and a second timing of paging relating to a second base station apparatus coincide with each other;
if it is judged that the first and second timings coincide with each other, transmitting a predetermined notification regarding a timing of paging to at least one of the first and second base station apparatuses; and
on the basis that the predetermined notification has been transmitted, changing the timing of paging of the base station apparatus to which the predetermined notification has been transmitted.

17. A control method to be executed by a base station apparatus, the control method comprising:
receiving a predetermined notification regarding a timing of paging from a terminal apparatus; and
changing a timing of paging with respect to the terminal apparatus when the predetermined notification has been received.

18. A program for causing a computer provided in a terminal apparatus to:
judge whether or not a first timing of paging relating to a first base station apparatus and a second timing of paging relating to a second base station apparatus coincide with each other;
if it is judged that the first and second timings coincide with each other, transmit a predetermined notification regarding a timing of paging to at least one of the first and second base station apparatuses; and
on the basis that the predetermined notification has been transmitted, change the timing of paging of the base station apparatus to which the predetermined notification has been transmitted.

19. A program for causing a computer provided in a base station apparatus to:
receive a predetermined notification regarding a timing of paging from a terminal apparatus; and
change a timing of paging with respect to the terminal apparatus when the predetermined notification has been received.
